# FASCICULE DE BREVET EUROPEEN

(11) **EP 1 736 636 B1**
(45) Date de publication et mention de la délivrance du brevet: **13.08.2008**
(21) Numéro de dépôt: 06115887.9
(22) Date de dépôt: 22.06.2006
(51) Int. Cl.: F01D 5/20

(54) **Aube creuse de turbomachine**
Hohle Turbinenschaufel
Hollow turbine blade

(30) Priorité: 24.06.2005 FR 0506442
(43) Date de publication de la demande: 27.12.2006
(73) Titulaire: SNECMA, 75015 Paris (FR)
(72) Inventeur: Bonneau, Damien, 77000, Melun (FR); Boury, Jacques, 77720, Saint Ouen En Brie (FR); Fachat, Thierry, 77550, Moissy Cramayel (FR)
(74) Mandataire: Cardy, Sophie Marie

(56) Documents cités:
- EP-A- 0 816 636
- EP-A- 1 270 873
- EP-A- 1 281 837
- EP-A- 1 422 383
- US-A- 5 348 446
- US-A1- 2004 197 190

## Description

L'invention concerne une aube creuse de turbomachine et, plus particulièrement, peut concerner une aube creuse de rotor de turbine à gaz, de type haute pression, de turboréacteur.

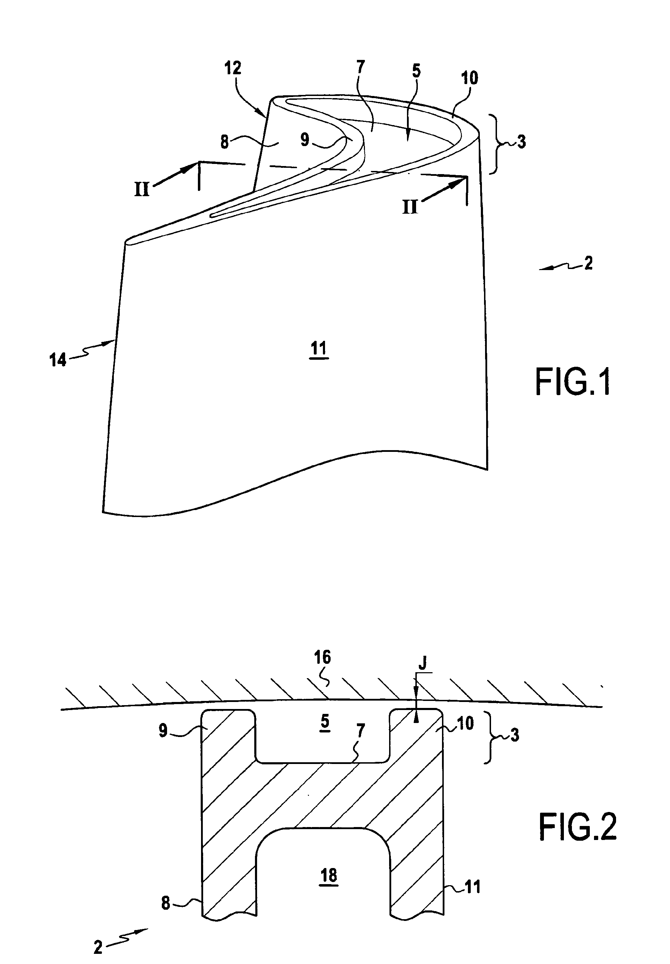

Comme représenté sur les figures 1 et 2, il est connu de prévoir à l'extrémité libre 3 d'une aube creuse 2, une cavité ouverte 5, ou "baignoire", délimitée par une paroi de fond 7 qui s'étend sur toute l'extrémité de l'aube et les parois latérales de deux rebords 9 et 10 qui s'étendent entre le bord d'attaque 12 et le bord de fuite 14 de l'aube, un des deux rebords 9 prolongeant la paroi d'intrados 8 de l'aube et l'autre rebord 10 la paroi d'extrados 11 de l'aube. Ces rebords sont appelés ci-après rebords d'intrados et d'extrados.

Les surfaces de frottement entre l'extrémité libre 3 de chaque aube et la surface annulaire du carter de turbine 16 qui entoure ces aubes, comme représenté sur la figure 2, sont ainsi limitées aux rebords 9 et 10 afin de protéger le corps de l'aube et, plus particulièrement, la paroi de fond 7. En outre, les rebords 9 et 10 permettent d'optimiser le jeu J entre l'extrémité libre de l'aube 3 et le carter 16 et, ainsi, de limiter le passage de gaz de l'intrados vers l'extrados générateur de pertes aérodynamiques préjudiciables au rendement machine.

Du fait des hautes températures des gaz traversant la turbine et des vitesses de rotation élevées des aubes, il est nécessaire de refroidir les rebords d'extrémité 9 et 10 afin d'éviter qu'ils se détériorent, sous l'effet combiné des frottements et de la chaleur. Aussi, des canaux de refroidissement sont généralement prévus pour relier le passage de refroidissement interne 18 de l'aube creuse, à la cavité ouverte 5 et délivrer ainsi de l'air frais aux rebords 9 et 10.

Par ailleurs, de récentes études ont montré que l'absence de rebord d'intrados 9 permettait de s'affranchir des problèmes de détérioration de ce rebord, tout en garantissant un rendement de turbine aussi bon, voire meilleur, que celui d'une aube à deux rebords, d'intrados et d'extrados.

Toutefois, l'absence de rebord d'intrados 9 oblige à améliorer le refroidissement du rebord d'extrados 10 qui n'est plus protégé des gaz chauds par le rebord d'intrados 9.

Dans les aubes conventionnelles à deux rebords décrites dans les documents EP 0 816 636 B1 et EP 1 270 873 A2, les canaux dédiés au refroidissement du rebord d'extrados refroidissent mal celui-ci, soit parce qu'ils sont percés trop loin de ce rebord, soit parce qu'ils débouchent au voisinage de l'extrémité supérieure du rebord. Au mieux, ils ne refroidissent donc que l'extrémité supérieure du rebord d'extrados.

Le document EP 1 422 382 A2, présente une solution pour améliorer le refroidissement du rebord d'extrados d'une aube dépourvue de rebord d'intrados. Cette solution consiste à réaliser des entailles dans la paroi latérale du rebord d'extrados qui fait face à la cavité ouverte et qui est frappée par les gaz chauds. Lesdites entailles s'étendent sensiblement de la base du rebord d'extrados à l'extrémité supérieure de ce rebord et des canaux de refroidissement sont percés au fond de ces entailles jusqu'au passage de refroidissement interne de l'aube. Ces entailles ont pour principaux inconvénients de fragiliser le rebord d'extrados, en particulier son extrémité supérieure, et de confiner l'air frais, de sorte que les parties de paroi situées entre ces entailles ne sont pas (ou très mal) refroidies. En outre, selon la forme des entailles, le perçage des canaux de refroidissement peut être une opération complexe, nécessitant un appareillage spécifique.

L'invention a pour but de proposer une aube creuse de turbomachine, simple à fabriquer, dont le ou les rebords d'extrémité soient bien refroidis.

Pour atteindre ce but, l'invention a pour objet une aube creuse de turbomachine selon la revendication 1.

Les avantages de l'invention sont liés, d'une part, à l'inclinaison de la paroi latérale du rebord par rapport à la direction orthogonale à la paroi de fond, ci-après considérée comme la direction verticale, et, d'autre part, au fait que les canaux de refroidissement sont ménagés à la base du rebord.

Cette disposition permet à l'air frais s'échappant des canaux de longer la paroi du rebord et de former ainsi sur cette paroi, un film d'air protecteur qui protège le rebord des gaz chauds et le refroidit.

De plus, l'inclinaison de la paroi latérale du rebord facilite le perçage des canaux de refroidissement : il est facile de percer ces canaux, même selon la direction verticale, car l'espace au dessus de la zone de jonction entre paroi de fond et paroi latérale est suffisamment dégagé pour permettre le passage d'un outil (par exemple, une électrode) ou d'un rayon laser. A l'inverse, on notera que percer un canal à la base d'une paroi latérale de rebord formant un angle aigu ou droit avec la paroi de fond est une opération longue et délicate car il faut faire attention à ne pas endommager la paroi latérale et à ne pas percer le canal trop loin de cette paroi.

Selon un mode de réalisation particulier de l'invention, l'aube est dépourvue de rebord d'intrados prolongeant la paroi d'intrados ou comprend seulement une portion de rebord d'intrados. Dans ce cas, l'extrémité de l'aube présente un rebord d'extrémité qui s'étend entre le bord d'attaque et le bord de fuite de l'aube, en retrait par rapport au côté d'intrados : il s'agit, généralement, du rebord d'extrados longeant le côté d'extrados mais il pourrait s'agir d'un rebord intermédiaire situé entre les côtés d'intrados et d'extrados de l'extrémité de l'aube.

L'invention et ses avantages seront mieux compris à la lecture de la description détaillée qui suit, d'un exemple de réalisation d'aube selon l'invention. Cette description fait référence aux figures annexées sur lesquelles :
- la figure 1 est une vue en perspective de l'extrémité libre d'une aube, présentant un rebord d'intrados et un rebord d'extrados ;
- la figure 2 est une section transversale selon le plan II-II de l'extrémité d'aube de la figure 1, dans une région dépourvue de canal de refroidissement ;
- la figure 3 est une section transversale analogue à celle de la figure 2, de l'extrémité libre d'une aube selon l'invention, qui présente un rebord d'extrados mais pas de rebord d'intrados. Cette section est réalisée au niveau d'un canal de refroidissement ; et
- la figure 4 est une vue en perspective suivant la flèche IV de la figure 3, montrant la paroi du rebord d'extrados de l'aube.

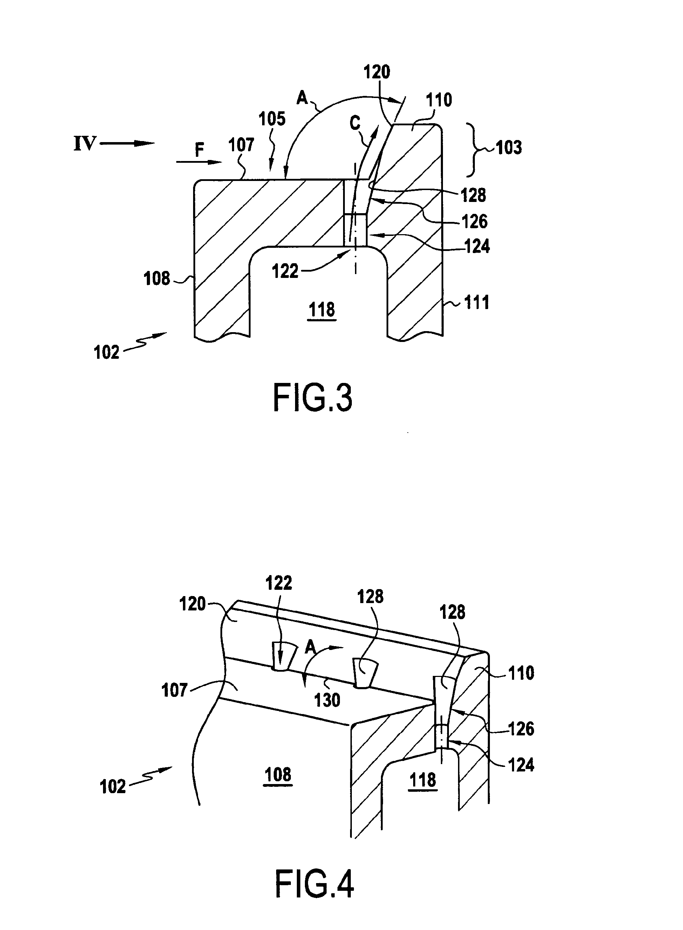

En référence aux figures 3 et 4, nous allons décrire un exemple de réalisation d'aube 102 selon l'invention. Les parties de l'aube 102 analogues à celles de l'aube 2 des figures 1 et 2 sont affectées des mêmes références numériques, augmentées de 100.

Selon l'exemple des figures 3 et 4, l'extrémité libre 103 de l'aube 102 présente, dans la région représentée, un rebord d'extrados 110 mais pas de rebord d'intrados.

La paroi latérale 120 du rebord d'extrados définit avec la paroi de fond 107 la cavité ouverte 105. Du fait de l'absence de rebord d'intrados, la paroi latérale 120 est frappée par les gaz chauds traversant la turbine, qui entraînent les aubes 102. Par rapport à l'aube, ces gaz chauds circulent suivant la flèche F. La paroi latérale 120 est donc soumise à de très fortes températures et doit être refroidie efficacement.

Dans ce but, des canaux de refroidissement 122 relient le passage de refroidissement interne 118 de l'aube 102 à la cavité 105 et débouchent à la base du rebord 110, au niveau de la zone de jonction entre ce rebord et la paroi de fond 107 de la cavité 105. Dans l'exemple, la paroi latérale 120 et la paroi de fond 107 ont des sections transversales planes, de sorte qu'il existe une arête 130 dans la zone de jonction entre ces parois. Toutefois, un arrondi pourrait être prévu dans cette zone de jonction.

Les canaux 122 comprennent deux parties : une partie de réglage formée par un perçage 124 et une partie de diffusion 126 formée, d'une part, par une empreinte 128 réalisée sur la paroi 120 du rebord à la sortie du canal 122 et, d'autre part, par le prolongement du perçage 124. La partie de réglage s'appelle ainsi car la section minimum du perçage 124 influe sur la quantité d'air frais traversant le canal 122.

La partie de diffusion 126 débouche à l'intérieur de la cavité 105 et communique avec le perçage 124. Le perçage 124 débouche, d'une part, à l'intérieur de la partie de diffusion 126 et, d'autre part, à l'intérieur du passage 118.

Le perçage 124 peut être de forme cylindrique et est réalisé, par exemple, par perçage au laser ou par électroérosion, à la base de la paroi 120. L'axe du perçage 124, représenté en traits mixtes, est orthogonal à la paroi de fond 107.

La paroi latérale 120 du rebord 110, forme un angle obtus A, strictement supérieur à 90°, avec la paroi de fond 107, de sorte qu'elle ne gène pas la réalisation du perçage vertical 124.

L'empreinte 128 est, quant à elle, formée en partie sur la paroi 120 et en partie à l'intérieur du perçage 124. Cette empreinte 128 est formée, par exemple, par électroérosion à l'aide d'une électrode que l'on vient centrer sur le perçage 124. Cette électrode peut être de forme conique avec un bout plus ou moins arrondi. Ainsi, avantageusement, l'empreinte 128 présente un contour de forme générale triangulaire et le fond de cette empreinte est incurvé et, plus précisément, convexe par rapport à l'axe du perçage 124.

Le contour triangulaire permet d'élargir le flux d'air sortant du perçage 124 et ainsi d'élargir la surface de paroi latérale 120 refroidie.

La forme incurvée du fond de l'empreinte 128, quant à elle, évite de former des arêtes sur le rebord 110, ce qui le fragiliserait. En outre, l'empreinte 128 s'arrête avant l'extrémité supérieure du rebord 110 afin de ne pas fragiliser celle-ci. Avantageusement, l'empreinte 128 s'arrête avant ou au voisinage de la mi-hauteur du rebord 110, afin que le flux d'air frais sortant en éventail des empreintes 128 se répande le plus possible sur la paroi 120.

Bien entendu, la répartition des canaux de refroidissement 122 le long de la paroi 120 est importante pour bien refroidir cette paroi et, avantageusement, les canaux 122 sont répartis régulièrement et sont suffisamment proches les uns des autres pour former un film protecteur sensiblement continu le long de la paroi 120. L'inclinaison d'angle A de la paroi 120 a également son importance pour que le flux d'air frais sortant des canaux 122 reste au contact de la paroi 120. Aussi, l'angle A est suffisamment faible pour que le flux d'air frais circulant suivant la flèche C, ne s'écarte pas de la paroi 120 mais, au contraire, reste à son contact.

Par ailleurs, l'angle A est suffisamment grand pour ne pas gêner le perçage des canaux 122, comme expliqué précédemment. Ainsi, l'angle A formé entre la paroi latérale 120 du rebord 110 et la paroi de fond 107 est compris entre 110° et 135° et, avantageusement, se situe aux environs de 120°.

L'exemple d'aube précédemment décrit est simple à fabriquer car, d'une part, on sait réaliser facilement en fonderie la paroi latérale 120 inclinée du rebord 110, de sorte qu'aucune étape d'usinage supplémentaire n'est nécessaire. Ensuite, le perçage des canaux de refroidissement est facilité par l'inclinaison de la paroi 120 et peut être réalisé rapidement, avec les techniques de perçage courantes. La fabrication d'une telle aube est donc économique.

Bien entendu, l'invention ne se limite pas à une aube présentant un unique rebord d'extrados, mais peut s'appliquer, par exemple, à une aube présentant un rebord d'extrados et une portion seulement de rebord d'intrados, ou encore à une aube présentant un rebord intermédiaire qui ne prolonge ni la paroi d'intrados, ni la paroi d'extrados, mais qui se situe entre les côté d'intrados et d'extrados de l'extrémité de l'aube. Quelque soit le rebord considéré, il est possible, grâce à l'invention, de le refroidir en formant un film d'air frais contre sa paroi latérale exposée aux gaz chauds.

## Revendications

1. Aube creuse de turbomachine comprenant un passage de refroidissement interne (118), une cavité ouverte (105) située à l'extrémité libre de l'aube et délimitée par une paroi de fond (107) et la paroi latérale (120) d'au moins un rebord (110) qui s'étend entre le bord d'attaque et le bord de fuite de l'aube, et au moins un canal de refroidissement (122) qui relie ledit passage de refroidissement interne à ladite cavité ouverte, ledit canal de refroidissement (122) débouchant à la base de ladite paroi latérale du rebord (110), cette paroi latérale (120) formant un angle (A) obtus, strictement supérieur à 90°, avec ladite paroi de fond (107), une empreinte (128) étant formée sur cette paroi latérale (120), à la sortie dudit canal de refroidissement (122), **caractérisée en ce que** cette empreinte (128) s'arrête avant l'extrémité supérieure du rebord (110).

2. Aube creuse selon la revendication 1, **caractérisée en ce que** l'aube de l'invention est dépourvue de rebord d'intrados ou comprend seulement une portion de rebord d'intrados.

3. Aube creuse selon la revendication 1 ou 2, **caractérisée en ce que** l'angle (A) formé entre la paroi latérale (120) et la paroi de fond (107) est compris entre 110 et 135° et, avantageusement, se situe aux environs de 120°.

4. Aube creuse selon l'une quelconque des revendications 1 à 3, **caractérisée en ce que** le contour de ladite empreinte (128) est de forme générale triangulaire.

5. Aube creuse selon l'une quelconque des revendications 1 à 4, **caractérisée en ce que** le fond de ladite empreinte (128) est incurvé.

6. Aube creuse selon l'une quelconque des revendications 1 à 5, **caractérisée en ce que** ledit canal de refroidissement (122) est en deux parties: une partie de réglage formée par un perçage (124) et une partie de diffusion (126) formée, en partie, par ladite empreinte (128).

7. Aube creuse selon l'une quelconque des revendications 1 à 6, **caractérisée en ce que** plusieurs canaux de refroidissement (122) sont répartis régulièrement le long de ladite paroi latérale (120).

8. Aube creuse selon l'une quelconque des revendications 1 à 7, **caractérisée en ce que** ladite empreinte (128) s'arrête au voisinage de la mi-hauteur dudit rebord (110).

## Claims

1. A hollow turbomachine blade including an internal cooling passage (118), an open cavity (105) situated at the free end of the blade and defined by an end wall (107) and the side wall (120) of at least one rim (110) extending between the leading edge and the trailing edge of the blade, and at least one cooling channel (122) connecting said internal cooling passage to said open cavity, said cooling channel (122) opening out at the base of said side wall of the rim, said side wall forming an angle (A) relative to said end wall (107) that is obtuse, being strictly greater than 90°, an indentation (128) being formed in said side wall (120) at the outlet from said cooling channel (122), **characterized in that** said indentation (128) comes to an end before the top end of the rim.

2. A hollow blade according to claim 1, **characterized in that** the blade of the invention does not have a pressure rim or has only a fraction of a pressure rim.

3. A hollow blade according to claim 1 or 2, **characterized in that** the angle (A) formed between the side wall (120) and the end wall (107) lies in the range 110° to 135°, and is advantageously situated at about 120°.

4. A hollow blade according to any one of claims 1 to 3, **characterized in that** the outline of said indentation (128) is generally triangular in shape.

5. A hollow blade according to any one of claims 1 to 4, **characterized in that** the bottom of said indentation (128) is curved.

6. A hollow blade according to any one of claims 1 to 5,, **characterized in that** said cooling channel (122) is in two portions: an adjustment portion formed by a drilled hole (124) and a diffusion portion (126) formed in part by said indentation (128).

7. A hollow blade according to any one of claims 1 to 6, **characterized in that** a plurality of cooling channels (122) are distributed regularly along said side wall (120).

8. A hollow blade according to any one of claims 1 to 7, **characterized in that** said indentation (128) comes to an end close to half way up the height of said rim (110).

## Patentansprüche

1. Hohle Turbomaschinenschaufel mit einem inneren Kühldurchgang (118), einem offenen Hohlraum (105), der sich am freien Ende der Schaufel befindet und durch eine bodenseitige Wand (107) und die Seitenwand (120) wenigstens eines Randes (110), der sich zwischen der Eintrittskante und der Austrittskante der Schaufel erstreckt, begrenzt ist, sowie mit wenigstens einem Kühlkanal (122), der den inneren Kühldurchgang mit dem offenen Hohlraum verbindet, wobei der Kühlkanal (122) an der Basis der Seitenwand des Randes (110) ausmündet, wobei diese Seitenwand (120) mit der genannten bodenseitigen Wand (107) einen stumpfen Winkel (A) bildet, der streng größer als 90° ist, wobei an dieser Seitenwand (120) am Ausgang des Kühlkanals (122) eine Einbuchtung (128) ausgebildet ist, **dadurch gekennzeichnet, daß** diese Einbuchtung (128) vor dem oberen Ende des Randes (110) aufhört.

2. Hohle Schaufel nach Anspruch 1, **dadurch gekennzeichnet, daß** die erfindungsgemäße Schaufel keinen vorderseitigen Rand aufweist oder nur einen Abschnitt eines vorderseitigen Randes aufweist.

3. Hohle Schaufel nach Anspruch 1 oder 2, **dadurch gekennzeichnet, daß** der zwischen der Seitenwand (120) und der bodenseitigen Wand (107) gebildete Winkel (A) zwischen 110 und 135° liegt und vorteilhafterweise etwa 120° beträgt.

4. Hohle Schaufel nach irgendeinem der Ansprüche 1 bis 3, **dadurch gekennzeichnet, daß** die Kontur der Einbuchtung (128) allgemein dreieckförmig ist.

5. Hohle Schaufel nach irgendeinem der Ansprüche 1 bis 4, **dadurch gekennzeichnet, daß** der Boden der Einbuchtung (128) gekrümmt ist.

6. Hohle Schaufel nach irgendeinem der Ansprüche 1 bis 5, **dadurch gekennzeichnet, daß** der Kühlkanal (122) aus zwei Teilen besteht, nämlich einem Einstellteil, der von einer Bohrung (124) gebildet ist, und einem Diffusionsteil (126), der teilweise von der Einbuchtung (128) gebildet ist.

7. Hohle Schaufel nach irgendeinem der Ansprüche 1 bis 6, **dadurch gekennzeichnet, daß** mehrere Kühlkanäle (122) gleichmäßig entlang der Seitenwand (120) verteilt sind.

8. Hohle Schaufel nach irgendeinem der Ansprüche 1 bis 7, **dadurch gekennzeichnet, daß** die Einbuchtung (128) in der Nähe der halben Höhe des Randes (110) aufhört.
